# EUROPEAN PATENT SPECIFICATION

(11) **EP 3 565 704 B1**
(45) Date of publication and mention of the grant of the patent: **31.05.2023**
(21) Application number: 17906371.4
(22) Date of filing: 21.04.2017
(51) Int. Cl.: B29C 64/165, B29C 64/295, B29C 64/291, B33Y 10/00, B33Y 30/00, B29C 35/02

(54) **ADDITIVE MANUFACTURING**
GENERATIVE FERTIGUNG
FABRICATION ADDITIVE

(43) Date of publication of application: 13.11.2019
(73) Proprietor: Hewlett-Packard Development Company, L.P., Spring TX 77389 (US)
(72) Inventor: BARNES, Arthur H., Vancouver, Washington 98683 (US)
(74) Representative: HGF
(86) International application number: PCT/US2017/028988
(87) International publication number: WO 2018/194687

(56) References cited:
- EP-A1- 2 739 457
- EP-A1- 3 135 407
- WO-A1-2015/106838
- WO-A1-2016/050319
- WO-A1-2016/119898
- WO-A1-2017/200534
- CN-A- 106 346 779
- CN-U- 205 969 973
- DE-A1-102015 006 533
- US-A1- 2017 021 419

## Description

### Background

Additive manufacturing machines produce 3D objects by building up layers of material. Some additive manufacturing machines are commonly referred to as "3D printers." 3D printers and other additive manufacturing machines make it possible to convert a CAD (computer aided design) model or other digital representation of an object into the physical object. The model data may be processed into slices each defining that part of a layer or layers of build material to be formed into the object.

EP2739457A1 concerns a method and an apparatus for selectively combining particulate material, comprising: (i) providing a layer of particulate material (10) to a part bed; (ii) providing radiation to sinter a portion of the material of the layer; (iii) providing a further layer of particulate material overlying the prior layer of particulate material including the previously sintered portion of material; (iv) providing radiation to sinter a further portion of the material within the overlying further layer and to sinter said further portion with the previously sintered portion of material in the prior layer; (v) successively repeating blocks (iii) and (iv) to form a three-dimensional object; and wherein at least some of the layers of particulate material are pre-heated with a heater (51) prior to sintering a portion of the material of the respective layer, the heater being configured to move relative to, and proximate, the particulate material.

DE102015006533A1 concerns a method and an apparatus for producing three-dimensional models by layering in a sintering process.

WO2015/106838A1 concerns a system for generating a three- dimensional object. The system comprises a carriage to move bi-directionally along a first axis relative to a support platform. The carriage is to receive, or have installed thereon, a plurality of modules each to perform an operation from a set of operations to generate a layer of a three-dimensional object. The system further comprises a controller to cause relative movement between the carriage and the support platform along the first axis, and to control, during the relative movement, operation of the modules to perform the set of operations in a predefined order.

### Brief Description of the Drawings

Figure 1 is a schematic side view of an example fusing apparatus for an additive manufacturing machine in accordance with aspects of the present disclosure.
Figure 2 is a flow chart of a broad method of operating a fusing apparatus of an additive manufacturing machine .
Figure 3 is a flow chart of an example method of operating a fusing apparatus of an additive manufacturing machine in accordance with claim 1.
Figure 4 is a schematic side view of an additive manufacturing machine which includes the fusing system of Figure 1..
Figures 5A-8B are side and top schematic views illustrating a sequence of an example four pass fusing cycle using a fusing system of an additive manufacturing machine which includes the fusing system of Figure 1.

### Detailed Description

In the following detailed description, reference is made to the accompanying drawings which form a part hereof, and in which is shown by way of illustration specific examples in which the disclosure may be practiced.

In some additive manufacturing processes, thermic energy is used to fuse together the particles in a powdered build material to form a solid object. Thermic energy to fuse the build material may be generated, for example, by applying a liquid fusing agent to a thin layer of powdered build material in a pattern based on the object slice and then exposing the patterned area to fusing energy. Fusing energy absorbing components in the fusing agent absorb fusing energy to help sinter, melt or otherwise fuse the build material. The process is repeated layer by layer and slice by slice to complete the object.

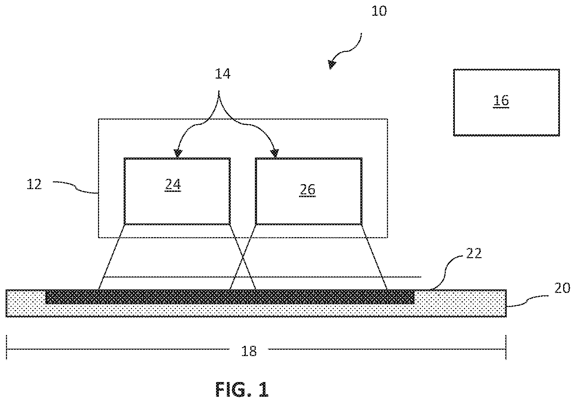

Figure 1 is a schematic side view of a fusing apparatus 10 for an additive manufacturing machine. Fusing apparatus includes an enclosure 12, a thermic source 14, and a control 16. Enclosure 12 is movable in an x-axial direction across a build zone 18. Build zone 18 contains a build material 20 and a fusing agent 22. Thermic source 14 is housed in enclosure 12. Thermic source 14 directs thermic energy toward build zone 18. Thermic source 14 includes a warming source, or first thermic source, 24 to emit a first emission spectrum and a fusing source, or second thermic source, 26 to emit a second emission spectrum.

Thermic source 14 remains energized during all cycles of the build process of a three-dimensional object. Warming and fusing sources 24, 26 emit different color temperatures (i.e., emission spectrums). Warming source 24 can be adjusted to maintain unfused build material at a target control temperature. Fusing energy from fusing source 26 can vary and can be adjusted on each of pass of the build process. Warming source 24 and fusing source 26 can be independently and separately adjusted to emit independently modulated emission spectrums.

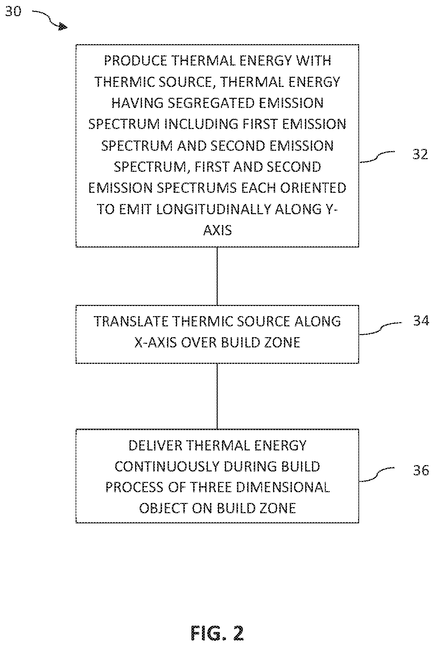

Figure 2 is a flow chart of a broad method 30 of operating a fusing apparatus of an additive manufacturing machine . At 32, a thermal energy is produced with a thermic source. The thermal energy includes a segregated emission spectrum including a first emission spectrum and a second emission spectrum. The first and second emission spectrums each oriented to emit longitudinally along a y-axis. At 34, the thermic source is translated along an x-axis over a build zone. At 36, the thermal energy is delivered continuously during a build process of the three dimensional object on the build zone.

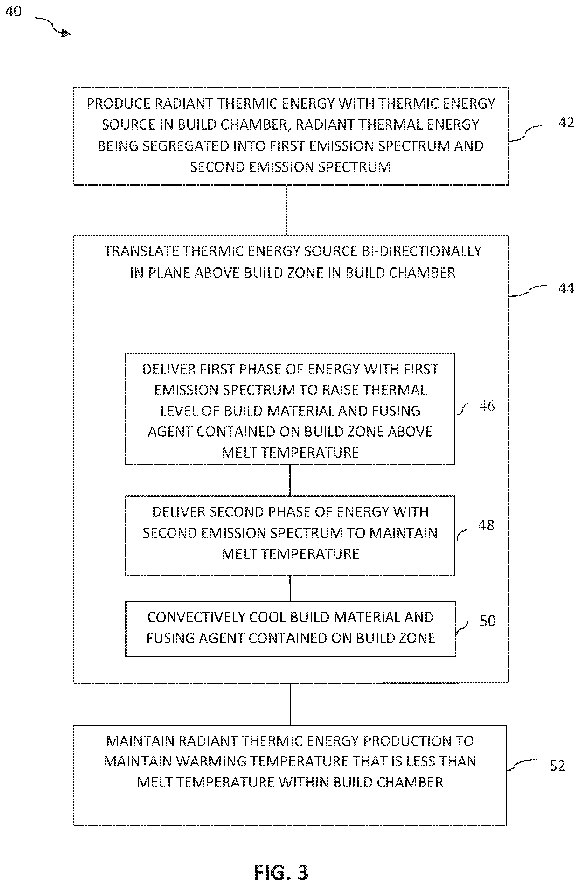

Figure 3 is a flow chart of the method 40 of operating a fusing apparatus of an additive manufacturing machine in accordance with the claims. At 42, a radiant thermic energy is produced with a thermic energy source in a build chamber. The radiant thermal energy is segregated into a first emission spectrum and a second emission spectrum. At 44, the thermic energy source is translated bi-directionally in a plane above a build zone in the build chamber. At 46, translating the thermic energy source delivers a first phase of energy with the first emission spectrum to raise a thermal level of a build material and a fusing agent contained on the build zone above a melt temperature. At 48, a second phase of energy is delivered with the second emission spectrum to maintain the melt temperature. At 50, the build material and the fusing agent contained on the build zone are convectively cooled. At 52, the maintained radiant thermic energy production maintains a warming temperature that is less than the melt temperature within the build chamber during a build process of the three dimensional object.

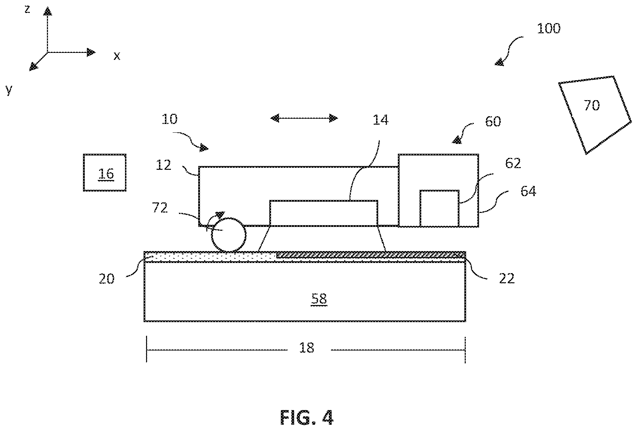

Figure 4 illustrates one example of additive manufacturing machine 100 including fusing system 10. In addition to fusing system, or assembly, 10, additive manufacturing machine 100 includes a dispensing assembly 60 movable over a build chamber 58. Fusing system 10 and dispensing assembly 60 are movable along the x-axis over build chamber 58. Dispensing assembly 60 includes a printhead 62 (or other suitable liquid dispensing assemblies) mounted to a dispensing carriage 64 to selectively dispense fusing agent 22 and other liquid agents, if used. Build chamber 58 can contain build material 20 and fusing agent 22 as layers are formed. Build chamber 58 can be any suitable structure to support or contain build material 20 in build zone 18 for fusing, including underlying layers of build material 20 and in-process slice and other object structures. For a first layer of build material 20, for example, build chamber 58 can include a surface of a platform that can be moved vertically along the y-axis to accommodate the layering process. For succeeding layers of build material 20, build zone 18 can be formed on an underlying build structure within build chamber 58 including unfused and fused build material forming an object slice. Controller 16 can control energy levels, as discussed further below. Controller 16 can also control other functions and operations of additive manufacturing machine 100.

Thermic energy is continuously emitted from thermic source 14 during the entire build process, or build cycle, of three dimensional objects for compliance with Flicker regulations that regulate for surges in power usage. Energy levels of lamps of thermic source 14 can be individually modulated, adjusted, and tuned during the build process to achieve target powder and part temperatures. Alternatively, energy levels of lamps can be modulated, adjusted, and tuned together as in group(s) or by source type during the build process to achieve target powder and part temperatures. For example, warming source 24 and fusing source 26 can be independently and separately adjusted to emit independently modulated emission spectrums. In one example, power to warming source 24 can be adjusted through a control loop that uses thermal feedback from an infrared camera 70 and controller 16, such as a proportional-integral derivative (PID) controller. For example, an energy level of warming source 24 can be modulated based on temperature feedback a non-contact IR sensor using PID controller 16 to maintain a build material temperature at a targeted set point. In one example, energy level of fusing source 26 is modulated based on a predetermined power modulation. In another example, energy level of fusing source 26 is modulated based on thermal feedback of fused build material temperatures using a non-contact IR camera and PID controller. In one example, a pulse width modulation (PWM) varies between 69% and 78% over the four pass fussing cycles.

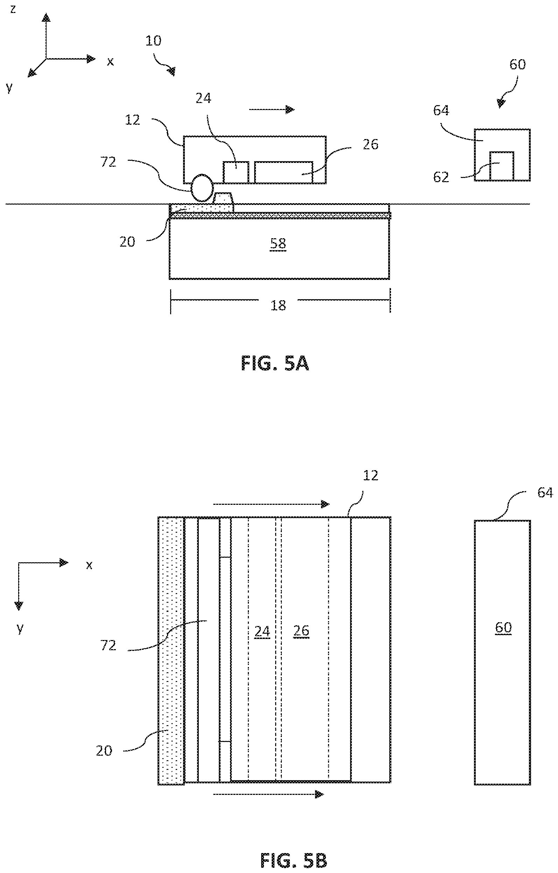

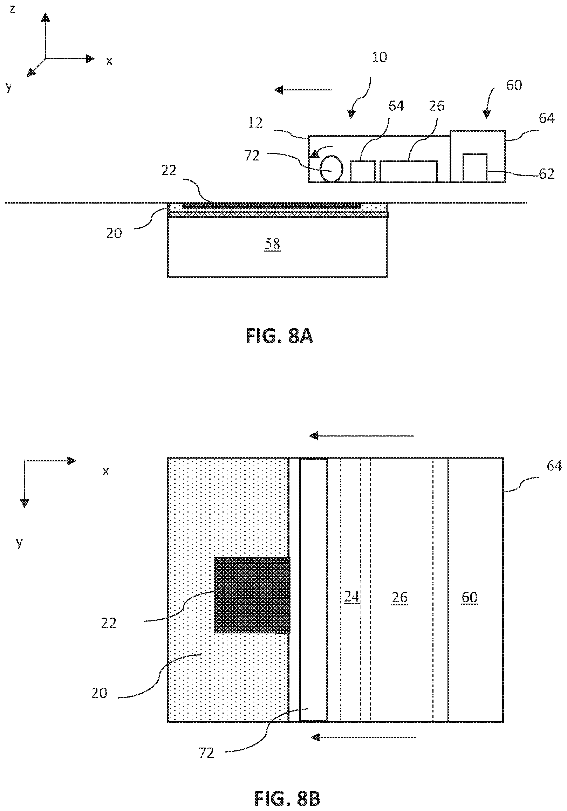

Figures 5A-8B are side and top schematic views illustrating an example sequence of a four pass fusing cycle using a fusing system of an additive manufacturing machine. Each pass includes multiple operations that can occur simultaneously during the respective pass. Fusing system 10 and dispensing assembly 60 move bi-directionally over build zone 18 within build chamber 58 along the same line of motion so that carriages 12, 64 can follow each other across build zone 18. A dual carriage fusing system in which carriages 12, 64 move along the same line of motion helps enable faster slew speeds and overlapping functions in each pass. In accordance with one example, direction of movement of the passes, is indicated by arrows in Figures 5A-8B. Carriages 12, 64 of fusing system 10 and dispensing assembly 60 move completely and entirely across build zone 18 and can be positioned on either side of build zone 18. In general, a roller 72 can be included on fuser carriage 12 to spread build material 20 to form layers over build zone 18. Dispenser carriage 64 carries the agent dispenser 62 to dispense fusing agent 22 on to each layer of build material 20. Thermic source 14 carried by carriage 12 heats and irradiates layered build material 20 and fusing agent 22.

With respect to thermic source 14 of fusing system 10, thermic source 14 can include any suitable number and type of thermic sources to heat and irradiate build material. Thermic source 14 including lower color temperature warming lamps and higher color temperature fusing lamps can provide control for heating and fusing of build material. Thermic source 14 illustrated in Figures 5A-8B include warming and fusing sources 24, 26. Fusing source 26 can be of higher color temperature to sufficiently heat fusing agent 22 and build material 20 to selectively fuse build the build material 20. Warming source 24 can be of lower color temperature to selectively heat the build material 20 without causing fuse build. In one example, fusing source 26 has a 2750 degree Kelvin color temperature. Fusing source 26 can include a series of thermal lamps each being longitudinally arranged in parallel with major axes disposed along the y-axis. In one example, warming source 24 has an 1800 degree Kelvin color temperature. Other color temperatures can also be suitable. A single or multiple warming and fusing sources 24, 26 can be included. Fusing lamp 24 is to irradiate build material 20 with fusing energy.

With reference to Figures 5A and 58, in a first pass of the example sequence, as fuser carriage 12 begins at left of build zone 18 and moves across build zone 18 toward right side of build zone 18. Warming lamp 24 is powered on to heat the underlying layer/slice in front of roller 72 as roller 16 passed across build zone 18 to form a first, or next, layer of build material 20. Roller 72 is positioned to contact build material 20 during the first spreading pass. Thermic energy from warming source 24 is reflected from previous layers of build material 20 to uniformly heat build zone. After first pass has been completed, fuser carriage 12 is positioned to right side of build zone 18 and prepares for a second spreading pass.

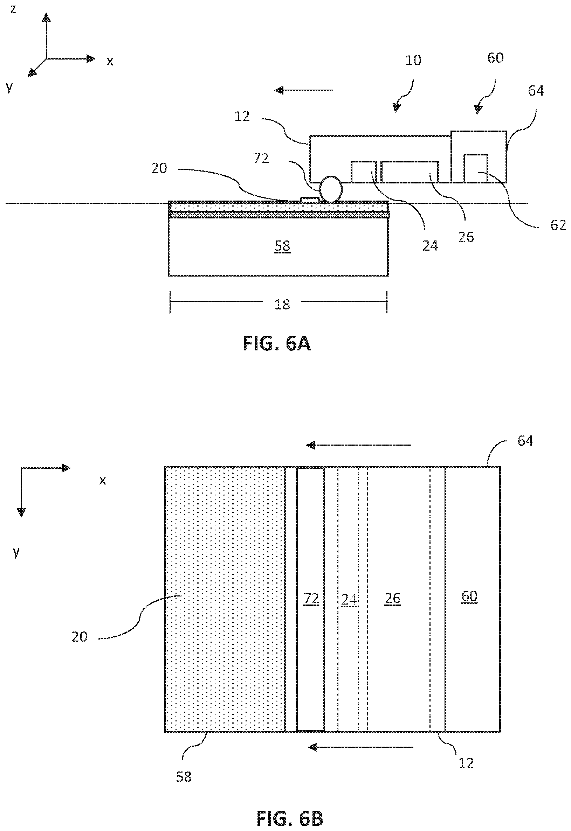

Second pass is illustrated in Figures 6A and 68. In second pass, as fuser carriage 12 moves back over build zone 18 from the right to the left, warming source 24 is on to heat the new layer of build material 20 in advance of dispenser carriage 64, which follows fuser carriage 12 over build zone 18 to dispense fusing and/or detailing agents on to the heated build material 20 in a pattern based on a next object slice. Roller 72 can complete spreading build material 20 that may not be completely spread during first pass, in advance of warming lamp 24 and dispenser carriage 64.

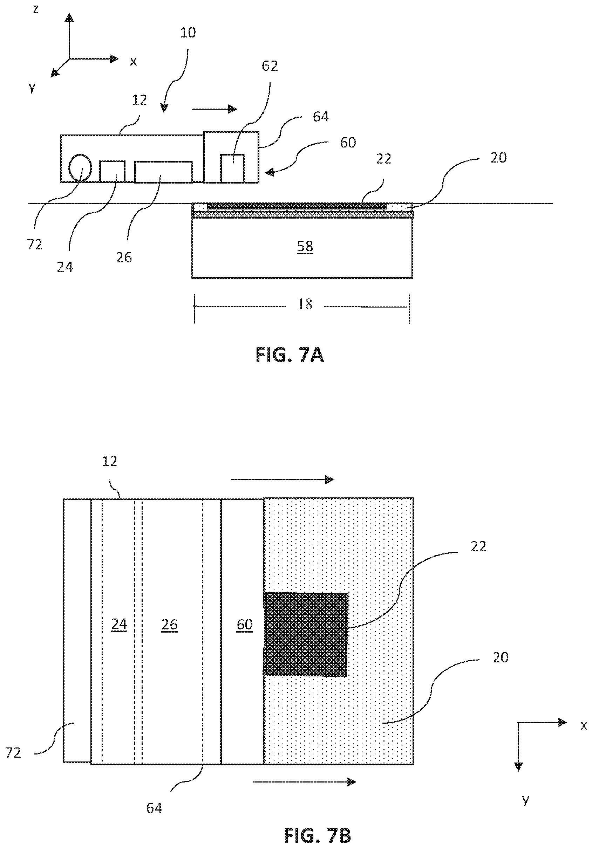

Third pass is illustrated in Figures 7A and 78. Third pass is a fusing pass. In third pass, dispenser carriage 64 moves back over build zone 18, from left to right, to dispense fusing and/or detailing agents 22 on to build material 20, followed by fuser carriage 12 with fusing source 26 on to expose patterned build material to fusing energy.

In fourth pass, as illustrated in Figures BA and 88, as fuser carriage 12 moves back over build zone 18, from right to left, and fusing source 26 is on to expose patterned build material to fusing energy. The four pass process may be repeated for successive layers of build material as the object is manufactured layer by layer and slice by slice. The build cycle is complete when all layers of the build material for the three dimensional object have been completed.

## Claims

1. A method of operating a fusing system of an additive manufacturing machine to form a three dimensional object, comprising:
producing (42) a radiant thermic energy with a thermic energy source (14) in a build chamber (58), the radiant thermal energy being segregated into a first emission spectrum and a second emission spectrum;
translating (44) the thermic energy source (14) bi-directionally in a plane above a build zone in the build chamber (58) to: deliver (46) a first phase of energy with the first emission spectrum to raise a thermal level of a build material and a fusing agent contained on the build zone above a melt temperature;
deliver (48) a second phase of energy with the second emission spectrum to maintain the melt temperature;
convectively (50) cooling the build material and the fusing agent contained on the build zone; and
maintaining (52) the radiant thermic energy production to maintain a warming temperature that is less than the melt temperature within the build chamber (58) during a build process of the three dimensional object.

2. The method of claim 1, comprising:
modulating energy levels of a continuously delivered thermal energy during the build process.

3. The method of claim 1, comprising:
repeatedly translating the thermic energy source (14) in the plane to alternately first-second phases of energy and then second-first phases of energy.

4. The method of claim 1, wherein the first emission spectrum is adjustable independent of the second emission spectrum during the build process.

5. An additive manufacturing machine having a fusing system operable to form a three dimensional object, comprising;
a thermic energy source (14);
a build chamber (58); and
a build zone in the build chamber (58),
the additive manufacturing machine being arranged to:
produce (42) a radiant thermic energy with the thermic energy source (14) in the build chamber (58), the radiant thermal energy being segregated into a first emission spectrum and a second emission spectrum;
translate (44) the thermic energy source (14) bi-directionally in a plane above the build zone to: deliver a first phase of energy with the first emission spectrum to raise a thermal level of a build material and a fusing agent contained on the build zone above a melt temperature;
deliver (48) a second phase of energy with the second emission spectrum to maintain the melt temperature;
convectively (50) cool the build material and the fusing agent contained on the build zone;and
maintain (52) the radiant thermic energy production to maintain a warming temperature that is less than the melt temperature within the build chamber (58) during a build process of the three dimensional object.

## Patentansprüche

1. Verfahren zum Betreiben eines Schmelzsystems einer additiven Fertigungsmaschine, um ein dreidimensionales Objekt auszubilden, das Folgendes umfasst:
Erzeugen (42) einer Strahlungswärmeenergie mit einer Wärmeenergiequelle (14) in einer Baukammer (58), wobei die Strahlungswärmeenergie in ein erstes Emissionsspektrum und ein zweites Emissionsspektrum abgetrennt wird;
Übertragen (44) der Wärmeenergiequelle (14) bidirektional in einer Ebene über einer Bauzone in der Baukammer (58), um: eine erste Energiephase mit dem ersten Emissionsspektrum abzugeben (46), um ein Wärmeniveau eines Baumaterials und eines Schmelzmittels, das auf der Bauzone enthalten ist, über eine Schmelztemperatur zu erhöhen;
Abgeben (48) einer zweiten Energiephase mit dem zweiten Emissionsspektrum, um die Schmelztemperatur aufrechtzuerhalten;
konvektives (50) Kühlen des Baumaterials und des auf der Bauzone enthaltenen Schmelzmittels; und
Aufrechterhalten (52) der Strahlungswärmeenergieerzeugung, um eine Erwärmungstemperatur aufrechtzuerhalten, die geringer als die Schmelztemperatur innerhalb der Baukammer (58) während eines Bauvorgangs des dreidimensionalen Objekts ist.

2. Verfahren nach Anspruch 1, das Folgendes umfasst:
Modulieren von Energieniveaus einer kontinuierlich abgegebenen Wärmeenergie während des Bauvorgangs.

3. Verfahren nach Anspruch 1, das Folgendes umfasst:
wiederholtes Verschieben der Wärmeenergiequelle (14) in der Ebene, um abwechselnd Erste-Zweite-Energiephasen und dann Zweite-Erste-Energiephasen.

4. Verfahren nach Anspruch 1, wobei das erste Emissionsspektrum unabhängig von dem zweiten Emissionsspektrum während des Bauvorgangs einstellbar ist.

5. Additive Fertigungsmaschine, die ein Schmelzsystem aufweist, das betriebsfähig ist, um ein dreidimensionales Objekt auszubilden, die Folgendes umfasst;
eine Wärmeenergiequelle (14); eine Baukammer (58); und
eine Bauzone in der Baukammer (58),
wobei die additive Fertigungsmaschine angeordnet ist, zum:
Erzeugen (42) einer Strahlungswärmeenergie mit der Wärmeenergiequelle (14) in der Baukammer (58), wobei die Strahlungswärmeenergie in ein erstes Emissionsspektrum und ein zweites Emissionsspektrum abgetrennt wird;
Übertragen (44) der Wärmeenergiequelle (14) bidirektional in einer Ebene über der Bauzone, um: eine erste Energiephase mit dem ersten Emissionsspektrum abzugeben, um ein Wärmeniveau eines Baumaterials und eines Schmelzmittels, das auf der Bauzone enthalten ist, über eine Schmelztemperatur zu erhöhen;
Abgeben (48) einer zweiten Energiephase mit dem zweiten Emissionsspektrum, um die Schmelztemperatur aufrechtzuerhalten;
konvektives (50) Kühlen des Baumaterials und des auf der Bauzone enthaltenen Schmelzmittels; und
Aufrechterhalten (52) der Strahlungswärmeenergieerzeugung, um eine Erwärmungstemperatur aufrechtzuerhalten, die geringer als die Schmelztemperatur innerhalb der Baukammer (58) während eines Bauvorgangs des dreidimensionalen Objekts ist.

## Revendications

1. Procédé de fonctionnement d'un système de fusion d'une machine de fabrication additive afin de former un objet tridimensionnel, comprenant :
la production (42) d'une énergie thermique rayonnante avec une source d'énergie thermique (14) dans une chambre de construction (58), l'énergie thermique rayonnante étant séparée en un premier spectre d'émission et un second spectre d'émission ;
la translation (44) de la source d'énergie thermique (14) de manière bidirectionnelle dans un plan au-dessus d'une zone de construction dans la chambre de construction (58) pour : délivrer (46) une première phase d'énergie avec le premier spectre d'émission afin d'élever un niveau thermique d'un matériau de construction et d'un agent de fusion contenu dans la zone de construction au-dessus d'une température de fusion ;
délivrer (48) une seconde phase d'énergie avec le second spectre d'émission afin de maintenir la température de fusion ;
le refroidissement par convection (50) du matériau de construction et de l'agent de fusion contenu dans la zone de construction ; et
le maintien (52) de la production d'énergie thermique rayonnante afin de maintenir une température de chauffage qui est inférieure à la température de fusion à l'intérieur de la chambre de construction (58) pendant un processus de construction de l'objet tridimensionnel.

2. Procédé selon la revendication 1, comprenant :
la modulation de niveaux d'énergie d'une énergie thermique délivrée en continu pendant le processus de construction.

3. Procédé selon la revendication 1, comprenant :
la translation répétée de la source d'énergie thermique (14) dans le plan alternativement pour des première-seconde phases d'énergie et ensuite des seconde-première phases d'énergie.

4. Procédé selon la revendication 1, dans lequel le premier spectre d'émission est ajustable indépendamment du second spectre d'émission pendant le processus de construction.

5. Machine de fabrication additive ayant un système de fusion permettant de former un objet tridimensionnel, comprenant ;
une source d'énergie thermique (14) ; une chambre de construction (58) ; et
une zone de construction dans la chambre de construction (58),
la machine de fabrication additive étant conçue pour :
produire (42) une énergie thermique rayonnante avec la source d'énergie thermique (14) dans la chambre de construction (58), l'énergie thermique rayonnante étant séparée en un premier spectre d'émission et un second spectre d'émission ;
translater (44) la source d'énergie thermique (14) de manière bidirectionnelle dans un plan au-dessus de la zone de construction pour : délivrer une première phase d'énergie avec le premier spectre d'émission afin d'élever un niveau thermique d'un matériau de construction et d'un agent de fusion contenu dans la zone de construction au-dessus d'une température de fusion ;
délivrer (48) une seconde phase d'énergie avec le second spectre d'émission afin de maintenir la température de fusion ;
refroidir par convection (50) le matériau de construction et l'agent de fusion contenu dans la zone de construction ; et
maintenir (52) la production d'énergie thermique rayonnante afin de maintenir une température de chauffage qui est inférieure à la température de fusion à l'intérieur de la chambre de construction (58) pendant un processus de construction de l'objet tridimensionnel.
